# EUROPEAN PATENT APPLICATION

(11) **EP 2 846 270 A1**
(43) Date of publication of application: **11.03.2015**
(21) Application number: 13781925.6
(22) Date of filing: 14.03.2013
(51) Int. Cl.: G06F 17/30, G06Q 30/00

(54) **NETWORK TRADING PLATFORM AND PROCESSING METHOD THEREOF**

(30) Priority: 28.04.2012 CN 201210135101
(71) Applicant: Beijing Changshengtiandi Ecommerce Co. Ltd., Beijing 100026 (CN)
(72) Inventor: YAN, Yanchun, Beijing 100026 (CN)
(74) Representative: Wächter, Jochen
(86) International application number: PCT/CN2013/072595
(87) International publication number: WO 2013/159608

(57) **Abstract**

The present invention discloses a network transaction platform, comprising: a personal space for publishing and residing at least one user tag defined by a buyer user, wherein information contained in each of the user tags is for describing a consumer demand of the buyer user; a database for storing commodity information and at least one commodity tag corresponding to the commodity information, wherein information contained in the commodity tag is for describing a consumer demand to which the commodity information is directed; and a retrieval module for retrieving from the database a commodity tag matching the user tag stored in the personal space and corresponding commodity information, and pushing and residing the commodity information in the personal space. Accordingly, the present invention further discloses a processing method for a network transaction platform. By means of the present invention, it is possible to give optimal result feedback according to a vague consumer demand put forward by a buyer user and provide a more rapid and accurate match result for scattered personal searches.

## Description

### BACKGROUND

The present invention relates to technology of implementing network transactions by using a network platform, and more specifically, to a network transaction platform and a processing method thereof.

In existing network transaction systems, a typical network transaction mode is such that a user initiates a search request to an e-business website, the e-business website returns an appropriate commodity search result according to the search request, and the user chooses a product from the commodity search result to form an order and finally completes the network transaction by online banking or other payment method. That is, the order is formed after the user carries out a search on his/her own initiative.

Such a traditional network transaction mode is a typical "people looking for goods" shopping style: when a user has some personal demand, he/she has to do a lot of product search and collection on different types or different interfaces of websites of each level of business (supplier, agent, etc.). Next, the user has to analyze relevant information prior to forming an order finally. In this course, since product information comes from different sources, the formats and contents are not uniform; if the user expects to get an optimal result that best meets his/her personal demand, he/she has to devote a large amount of time and energy to comparing and analyzing the product information. On the other hand, in many scenarios the user desiring a network transaction simply indicates a vague, objective consumer demand, e.g., using colloquial phrases to describe the general purpose, price range and usage scenario of the desired product. However, in the prior art technical solutions for this problem fail to feed back an enough precise result to the user according to the vague consumer demand. As a result, the user is exhausted by the low-efficiency step of repeatedly and manually screening mass commodity information before finding the desired commodity.

### SUMMARY

To eliminate the above drawbacks in the prior art, the present invention provides a network transaction platform, comprising:

A personal space for publishing and residing at least one user tag defined by a buyer user, wherein information contained in each of the user tags is for describing a consumer demand of the buyer user;

A database for storing commodity information and at least one commodity tag corresponding to the commodity information, wherein information contained in the commodity tag is for describing a consumer demand to which the commodity information is directed; and

A retrieval module for retrieving from the database a commodity tag matching the user tag stored in the personal space and corresponding commodity information, and pushing and residing the commodity information in the personal space.

Accordingly, the present invention further provides a processing method for a network transaction platform, the method comprising:

Building a database, a retrieval module and a personal space, respectively;

Publishing and residing in the personal space at least one user tag defined by a buyer user, wherein information contained in each of the user tags is for describing a consumer demand of the buyer user;

Storing in the database commodity information and at least one commodity tag corresponding to the commodity information, wherein information contained in the commodity tag is for describing a consumer demand to which the commodity information is directed; and

The retrieving module retrieving from the database a commodity tag matching the user tag stored in the personal space and corresponding commodity information, and pushing and residing the commodity information in the personal space.

The network transaction platform and its processing method provided by the present invention describe consumer demands and specific commodities of buyer users by means of "tagging" techniques, and index and retrieve specific commodities by "tagging" technical means, thereby giving optimal result feedback according to a vague consumer demand put forward by a buyer user and providing a more rapid and accurate match result for scattered personal searches.

### BRIEF DESCRIPTION OF THE SEVERAL VIEWS OF THE DRAWINGS

Other features, objects and advantages of the present invention will become more apparent from the following detailed description of non-limiting embodiments, when taken in conjunction with the accompanying drawings, wherein the same or similar reference generally refers to the same or similar components.
Fig. 1 is a flowchart of a processing system for a network transaction platform according to one specific embodiment of the present invention;
Figs. 2-4 are schematic views of principles of the working method of several steps in the flowchart shown in Fig. 1;
Fig. 5 is a schematic structural view of a network transaction platform according to one specific embodiment of the present invention; and
Fig. 6 is a schematic structural view of a network transaction platform according to one preferred specific embodiment of the present invention.

### DETAILED DESCRIPTION

To better understand and set forth the present invention, further detailed description is presented below to the present invention with reference to the accompanying drawings.

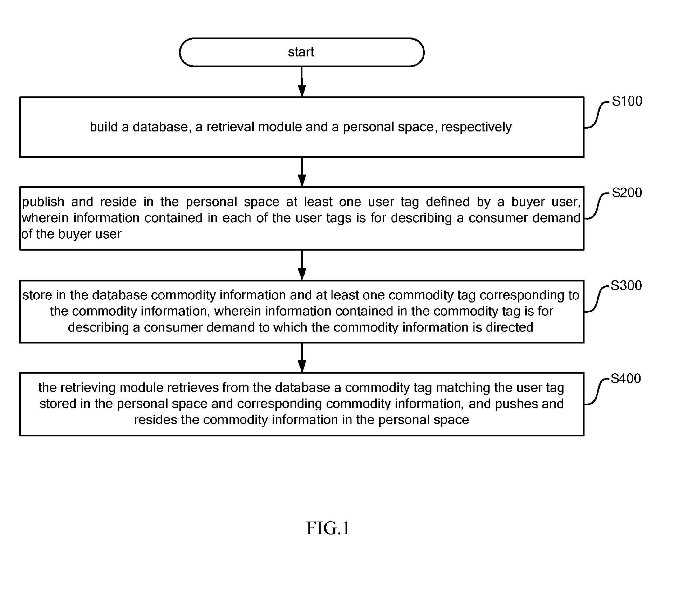

First with reference to Fig. 1, this figure is a flowchart of a processing method for a network transaction platform according to one specific embodiment of the present invention. The method comprises:

Step S100: building a database, a retrieval module and a personal space, respectively.

The method flow shown in the specific embodiment of the present invention forms a basic architecture of the network transaction platform in step S100; detailed illustration will be presented below to the database, the retrieval module and the personal space. Typically, the network transaction platform is implemented as a B/S architecture or C/S architecture that can be easily used across platform, and preferably as a B/S architecture. Various portions within the network transaction platform are designed and running based on the above arrangement.

Step S200: publishing and residing at least one user tag defined by a buyer user in the personal space, wherein information contained in each of the user tags is for describing a consumer demand of the buyer user.

Typically, in the B/S architecture the presentation design of the personal space is in web form, the user leverages various types of terminals to access a web page corresponding to the personal space and carries out human-computer interaction via an interaction interface in the web page. Usually the web page can be parsed and run by a browser provided on a terminal, so as to provide to the user a friendly data presentation interface and a human-computer interaction interface; the terminal includes without limitation: a personal computer terminal, such as a personal computer terminal having Windows operating system, Linux operating system or Mac OS installed thereon. In the C/S architecture, the presentation design of the personal space is web form that can be parsed and run by a client, the client being installed within a mobile terminal or a multimedia terminal, wherein the mobile terminal is an intelligent terminal having a terminal operating system like Symbian, Windows Mobile, iOS, Android, Maemo, WebOS, Palm OS or Blackberry OS installed on; the multimedia terminal is IPTV, for example.

Further, the user can design at least one user tag by using an input interface in the web page, wherein information contained in each of the user tags is for describing a consumer demand of the buyer user. Take an example: in an application scenario, a consumer demand of the buyer user is to buy edible food that is suitable for one-year-old baby, including baby formula, baby cereals, baby vitamins, etc. In traditional keyword search mode, for these three kinds of food, the user has to conduct at least three searches before finding the desired food, and keywords provided during the searches must fall within the conventional keyword range so as to improve the search accuracy. Typically, in one embodiment of the present invention the buyer user is allowed to use a general description for commodity search, which general description is the user tag mentioned in step S200. For example, the buyer user logically, reasonably uses the user tags "one-year-old baby" and "food" to describe his/her own consumer demand, and publishes and resides these user tags in the personal space so that the user tags can be invoked in the background for completing the commodity search. Usually keyword information contained in the user tags is sufficient to generally describe the consumer demand of the buyer user. When the buyer user has several consumer demands, it is possible to consider providing a group of appropriate user tags for each consumer demand. For example, the buyer user can further use the user tags "imported fridge" and "under 3000 RMB" to describe such a consumer demand as searching for and buying a household appliance "imported fridge under 3000 RMB." Note the user tags and information contained therein are defined by the buyer user; typically, the buyer user inputs phrases with natural meaning to compose the user tags.

Step S300: storing in the database commodity information and at least one commodity tag corresponding to the commodity information, wherein information contained in the commodity tag is for describing a consumer demand corresponding to the commodity information.

Specifically, the database can be implemented using well-known techniques. In one embodiment, the database is integrated in the network transaction platform. In another embodiment, the database consists of a plurality of database systems distributed on the Internet. Like the user tag, information contained in the commodity tag is sufficient to logically, reasonably express a consumer demand to which commodity information corresponding to the commodity tag is directed. For example, commodity information "baby formula" is directed to consumer demands of buyer users who want to buy baby food, so such commodity tags as "baby food" and/or "one-year-old baby" can be set for the commodity information "baby formula," for expressing consumer demands to which "baby formula" is directed. Typically, phrases with natural meaning compose the commodity tags.

Step S400: the retrieval module retrieving from the database a commodity tag corresponding to the user tag stored in the personal space and corresponding commodity information, and pushing and residing the commodity information in the personal space.

Specifically, the retrieval module can access the database and retrieve from the database a commodity tag matching the user tag stored in the personal space by means of well-known methods such as accessing pre-established indices. For example, use an exact match according to the user tag "one-year-old baby" so as to find the commodity tag "one-year-old baby" and corresponding various commodity information; or use a fuzzy match according to the user tag "one-year-old baby" to decide commodity tags like "baby" and "baby food" as similar or like tags of the user tag "one-year-old tag" and find various commodity information corresponding to the commodity tags "baby" and "baby food." Those implementing this embodiment can formulate appropriate matching rules so as to satisfy background operating demands of the exact match or fuzzy match. After the retrieval module complete the search according to the user tag by the exact match or fuzzy match, the retrieval module pushes and resides the matching commodity tag and corresponding commodity information in the personal space. Typically, when the buyer user accesses a web page corresponding to the personal space, he/she can view the commodity tag and corresponding commodity information that have been published and built in the web page.

Preferably, the flow step provided by this specific embodiment further comprises: storing in the database merchant information and at least one merchant tag corresponding to the merchant information, wherein information contained in the merchant tag is for describing a consumer demand to which the merchant is directed; the retrieval module also retrieving from the database a merchant tag matching the user tag stored in the personal space and corresponding merchant information, and pushing and residing the merchant information in the personal space. For example, by entering the entrance provided by merchant information "formula store," the buyer user can browse lots of merchant information related to "formula," and logically reasonably, the merchant information "formula store" can correspond to a plurality of merchant tags for describing consumer demands of different buyer users. For example, the merchant tags comprise "one-year-old baby," "formula," "baby food," "baby," "two-year-old baby," "three-year-old baby," etc. The process for establishing the merchant tag may refer to the process for establishing the commodity tag in step S300, and the process for matching the merchant tag according to the user tag by the retrieval module may refer to the process for matching the merchant tag according to the user tag in step S400.

To make it convenient for the buyer user to have knowledge of transactions of commodity corresponding to the commodity information, the commodity information comprises: the commodity's category, name, feature, brand, price, inventory, promotional information, supplier, picture, video, relevant web page link, and historical transaction records, customer reviews, other data for presenting the commodity's transaction attributes, or combinations thereof. Accordingly, to make it convenient for the buyer user to have knowledge of transactions of a merchant corresponding to the merchant information, the merchant information comprises: the merchant's address, contact information, character introduction, picture, video, relevant web page link, customer reviews, other data for presenting the merchant's transaction attributes, or combinations thereof.

Note considering that various data is updated during normal operation of the network transaction platform, once the database records new commodity information or merchant information, the personal space might receive more merchant information or commodity information pushed by the retrieval module. Steps S200, S300 and S400 may be executed discretely in temporal parallel according to the actual operation situation of the network transaction platform, and is not necessarily executed in the order from S200 to S400.

Preferably, in one embodiment the commodity information or the merchant information is generated according to data uploaded by a seller user, and the database provides a corresponding upload interface for call by the seller user to upload the data. Meanwhile, optionally after the commodity information or the merchant information is generated according to data uploaded by a seller user, a user (including a seller user, a buyer seller or a platform administrator) of the network transaction platform maps the one or more user tags to the one or more commodity tags or merchant tags, or the commodity tag or the merchant tag is generated as defined by the seller user. An advantage of this design method is that the seller user can freely define a consumer demand to which the uploaded commodity information or merchant information is directed (by defining the commodity information or the merchant tag), or a consumer demand to which the commodity information or merchant information is directed can be perfected by the user of the network transaction platform so that the retrieval module can conduct more precise matches and in turn the commodity information or merchant information presented to the buyer user in the personal space becomes more accurate. Especially note that the commodity tag or the merchant tag may not one-step formed but temporally discretely formed with the increase of the data amount in and visits to the network transaction platform.

From the perspective of buyer users' concern focuses, preferably the method shown in Fig. 1 further comprises the steps of: collecting the user tags, the commodity tags and the merchant tags, and making statistics of hot user tags, hot commodity tags and hot merchant tags, e.g., filtering according to some concern extent of the user tag, the commodity tag and the merchant tag, wherein the concern extent is, for example, the amount of clicks, the amounts of cross-sell commodities/merchants, or close rate or release frequency of the user tag, the commodity tag and the merchant tag. The statistics of such "hot tags" helps to regulate concrete content of the user tag, the commodity tag and the merchant tag, so as to increase the search success rate of the commodity information or the merchant information. Based on this premise, while defining the user tag the buyer user can directly choose qualified parts from hot user tags, hot commodity tags and hot merchant tags as the user tag.

More preferably, the commodity information and/or the merchant information further can be generated from data fetched from the Internet. A conventional processing method is to provide a crawl program for extracting appropriate data from other systems, which provide e-business transactions, over the Internet so as to generate the commodity information and/or the merchant information. An advantage of such design is to expand data sources of the commodity information and/or the merchant information and also make it convenient for the network transaction platform to share and interface data with other e-business transaction systems.

After the commodity information resides in the personal space, a buyer user corresponding to the personal space might want to perform further operation to the commodity information so as to implement a complete e-transaction. Accordingly, this specific embodiment further provides the steps of: generating an order according to the commodity information residing in the personal space; and handling the order according to the operation of the buyer user corresponding to the personal space, or forwarding the order to a third-party transaction system for handling. The handling the order may refer to solutions for handling e-orders in network transaction platforms according to the prior art, which is not detailed here.

Based on the above-described handling method for a network transaction platform, to increase functions, e.g., satisfying multi-user use demands and social demands, preferably the method provided by this specific embodiment further comprises the step of: combining a plurality of the personal spaces into a social platform, wherein the plurality of the personal spaces share stored data. After the plurality of the personal spaces are combined into a social platform, each of the personal spaces not only has the function of presenting the commodity information or the merchant information but also serves a function as a network virtual community. Typically, the personal space stores personalized information uploaded by the corresponding buyer user. The personalized information comprises one or more of text, pictures, video, audio, links or other multimedia electronic data for implementing a network social function, so as to satisfy the buyer user's demand for personalized arrangement in the personal space for network social contact. The concrete design method may refer to solutions for social network service in the prior art, e.g., providing social circles, interest groups, etc.

As the plurality of the personal spaces in the social platform share stored data between each other, for purposes of editing and information confidentiality of the personal space, the personal space provides the following functions: providing a corresponding human-computer interaction interface for the buyer user to edit or delete the personalized information and/or the merchant information, the commodity information and the user tag residing in the personal space; and modifying view permissions of the personalized information and/or the merchant information, the commodity information and the user tag residing in the personal space. In addition, the personal space further provides the following functions: forwarding the commodity information/the merchant information residing in one personal space to other personal space or public page. With reference to a share function in existing social networks, the design makes it convenient to exchange information between a plurality of the personal spaces. A typical application scenario is as below: after buyer user A in personal space A publishes a group of user tags, friend buyer user B in the same social circle views this group of user tags and sends appropriate commodity information or merchant information to personal space A or a public information publishing page of the social circle by a forward function of personal space B, so that buyer user A can choose helpful information. Generally speaking, the establishment of the social circle helps to personal spaces within the social platform to obtain useful commodity information or merchant information more accurately and efficiently, thereby reducing the average time spent in useful information search.

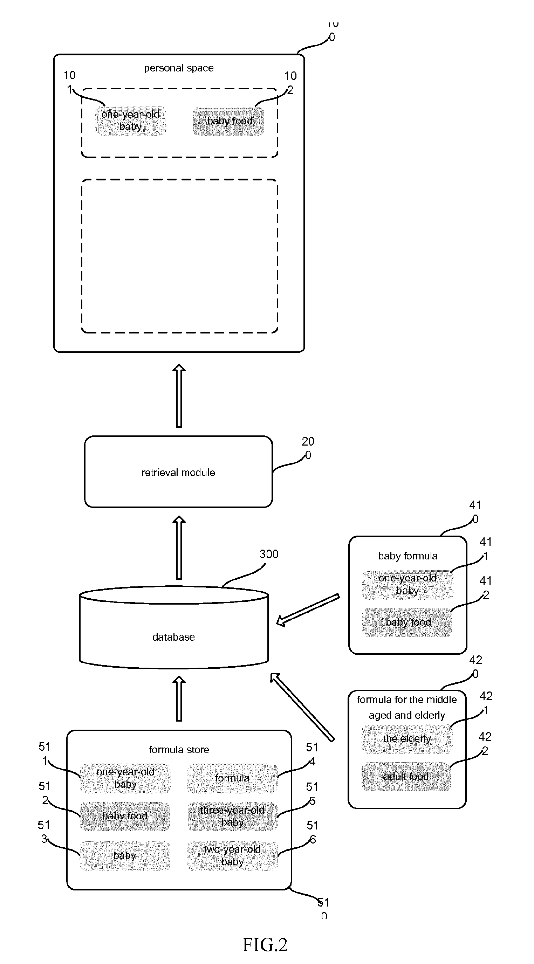

To better illustrate the working principle of the method flow shown in Fig. 1, refer to Figs. 2-4 which are schematic views of the principle of the working method of steps in the flowchart shown in Fig. 1. First with reference to Fig. 2, a user tag 101 "one-year-old baby" and a user tag 102 "baby food" are published and reside in a personal space 100; this group of user tags is for indicating a consumer demand of a buyer user corresponding to personal space 100 is "food suitable for one-year-old baby."

A database 300 stores commodity information 410 "baby formula," commodity information 420 "formula for the middle-aged and elderly" and merchant information 510 "formula store." Commodity information 410 corresponds to two commodity tags, namely a commodity tag 411 "one-year-old baby" and a commodity tag 412 "baby food"; commodity information 420 corresponds to two commodity tags, namely a commodity tag 421 "the elderly" and a commodity tag 422 "adult food"; merchant information 510 corresponds to six merchant tags, namely a merchant tag 511 "one-year-old baby," a merchant tag 512 "baby food," a merchant tag 513 "baby," a merchant tag 514 "formula," a merchant tag 515 "three-year-old baby" and a merchant tag 516 "two-year-old baby."

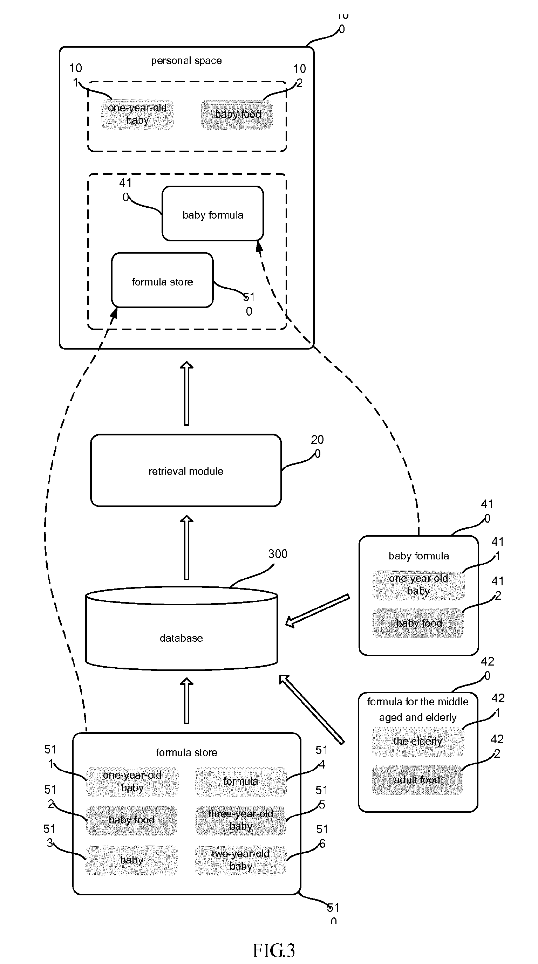

Further, a retrieval module 200 retrieves commodity information and/or merchant information matching the user tag residing in personal space 100 from commodity information and/or merchant information stored in database 300 and sends the matching commodity information and/or merchant information to personal space 100. With reference to Fig. 3, after retrieval module 200 conducts matches, if commodity tag 411 corresponding to commodity information 410 exactly matches user tag 101, or commodity tag 412 is highly similar to user tag 102, then retrieval module 200 decides the consumer demand to which the commodity information 410 is directed coincides with the consumer demand described by the user tag in personal space 100, and pushes and resides commodity information 410 in personal space 100; if commodity tags 421 and 422 corresponding to commodity information 420 is considerably different from user tag 101 or 102, then retrieval module 200 decides they do not logically match each other, i.e., the consumer demand corresponding to commodity information 410 does not coincide with the consumer demand described by the user tag in personal space 100, so commodity information 420 is ignored; if merchant tag 511 corresponding to merchant information 510 exactly matches user tag 101, or merchant tag 512 is highly similar to user tag 102, then retrieval module 200 decides the consumer demand to which the merchant information 510 is directed coincides with the consumer demand described by the user tag in personal space 100, and pushes and resides merchant information 510 in personal space 100. To sum up, in personal space 100 shown in Fig. 3 there reside merchant information 510 and commodity information 410 conforming to a consumer demand of the corresponding buyer user.

After the network transaction platform operates normally, as commodity information or merchant information stored in database 300 increases, a more common practice of retrieval module 200 is to first retrieve a commodity tag/merchant tag corresponding to a user tag, and then find corresponding commodity information/merchant information according to an index of the matching commodity tag/merchant tag. The method flows shown in Figs. 2 and 3 are merely illustrative and do not limit a concrete retrieval method of retrieval module 200.

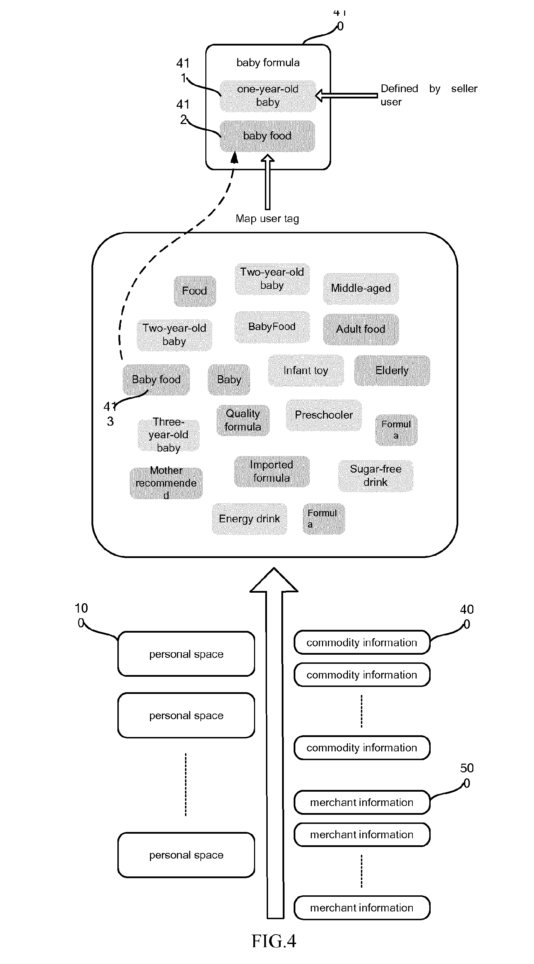

To better illustrate how to generate a commodity tag/merchant tag corresponding to commodity information/merchant information, please refer to Fig. 4, which illustrates a method for generating commodity tags 411 and 412 by taking commodity information 410 as an example. Commodity tag 411 is defined by a seller user providing the commodity information 410. Typically, while uploading commodity information 410, the seller user inputs a keyword "one-year-old baby" to generate corresponding commodity tag 411. Typically, commodity tag 412 is generated through selecting and mapping a tag 413 by the seller user, a network transaction platform background program or one or more buyer users (optionally, the generating of merchant tag 412 should be finally authorized by the seller user). Preferably, a tag set to which tag 413 belongs includes hot tags among various types of tags corresponding to a plurality of personal spaces 100, a plurality of commodity information 400 and a plurality of merchant information 500.

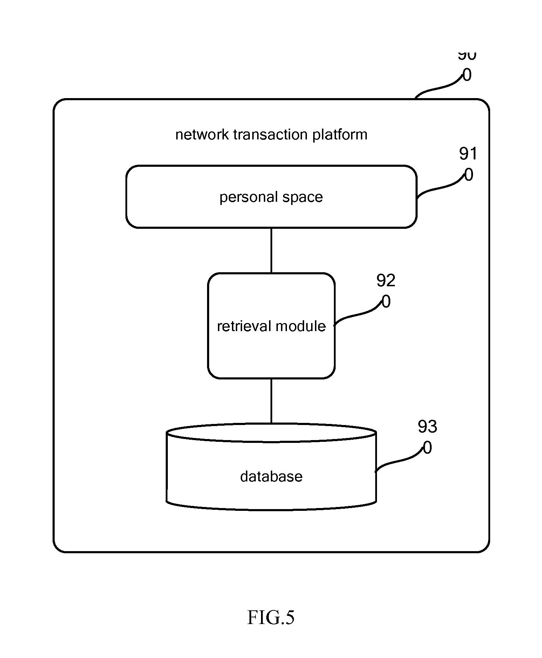

On the other hand, the present invention further provides a network transaction platform. With reference to Fig. 5, this figure is a schematic structural view of a network transaction platform according to one specific embodiment of the present invention. Terms and part of flow appearing in this portion may refer to the illustration of corresponding portion in the embodiment about the method. A network transaction platform 900 comprises:

A personal space 910 for publishing and residing at least one user tag defined by a buyer user, wherein information in each user tag is for describing a consumer demand of the buyer user;

A database 930 for storing commodity information and at least one commodity tag corresponding to the commodity information, wherein information contained in the commodity tag is for describing a consumer demand to which the commodity information is directed; and

A retrieval module 920 for retrieving from database 930 a commodity tag corresponding to the user tag stored in personal space 910 and corresponding commodity information, and pushing and residing the commodity information in personal space 910.

Typically, network transaction platform 900 is implemented as a B/S architecture or C/S architecture that can be easily used across platform, and preferably as a B/S architecture. Various portions within network transaction platform 900 are designed and running based on the above arrangement, and these portions communicate with each other via the Internet/WAN. In the B/S architecture the presentation design of personal space 910 is web form, the user leverages various types of terminals to access a web page corresponding to personal space 910 and carries out human-computer interaction via an interaction interface in the web page. Usually the web page can be parsed and run by a browser provided on a terminal, so as to provide to the user a friendly data presentation interface and a human-computer interaction interface; the terminal includes without limitation: a personal computer terminal, such as a personal computer terminal having Windows operating system, Linux operating system or Mac OS installed thereon. Optionally, network transaction platform 900 may further be implemented as a C/S architecture, the presentation design of personal space 910 is web form that can be parsed and run by a client, the client being installed within a mobile terminal or a multimedia terminal, wherein the mobile terminal is an intelligent terminal having a terminal operating system like Symbian, Windows Mobile, iOS, Android, Maemo, WebOS, Palm OS or Blackberry OS installed on; the multimedia terminal is IPTV, for example.

Database 930 can be implemented using well-known techniques. In one embodiment, database 930 is integrated in network transaction platform 900. In another embodiment, database 930 consists of a plurality of database systems distributed on the Internet.

Preferably, database 930 further stores merchant information and at least one merchant tag corresponding to the merchant information, wherein information contained in the merchant tag is for describing a consumer demand to which the merchant is directed. Retrieval module 920 further retrieves from database 930 a merchant tag matching the user tag stored in personal space 910 and corresponding merchant information, and pushes and resides the merchant information in personal space 910.

In one embodiment the commodity information or the merchant information is generated according to data uploaded by a seller user, and database 930 provides a corresponding upload interface (may defined in the web page form) for call by the seller user to upload the data. Meanwhile, optionally after the commodity information or the merchant information is generated according to data uploaded by a seller user, a user (including a seller user, a buyer seller or a platform administrator) of the network transaction platform maps the one or more user tags to the one or more commodity tags or merchant tags, or the commodity tag or the merchant tag is generated as defined by the seller user. An advantage of this design method is that the seller user can freely define a consumer demand to which the uploaded commodity information or merchant information is directed (by defining the commodity information or the merchant tag), or a consumer demand to which the commodity information or merchant information is directed can be perfected by the user of network transaction platform 900 so that the retrieval module can conduct more precise matches and in turn the commodity information or merchant information presented to the buyer user in the personal space becomes more accurate. Especially note perhaps the commodity tag or the merchant tag is not one-step formed but temporally discretely formed with the increase of the data amount in and visits to the network transaction platform 900.

To make it convenient for the buyer user to have knowledge of transactions of commodity corresponding to the commodity information, the commodity information comprises: the commodity's category, name, feature, brand, price, inventory, promotional information, supplier, picture, video, relevant web page link, and historical transaction records, customer reviews, other data for presenting the commodity's transaction attributes, or combinations thereof. Accordingly, to make it convenient for the buyer user to have knowledge of transactions of a merchant corresponding to the merchant information, the merchant information comprises: the merchant's address, contact information, character introduction, picture, video, relevant web page link, customer reviews, other data for presenting the merchant's transaction attributes, or combinations thereof.

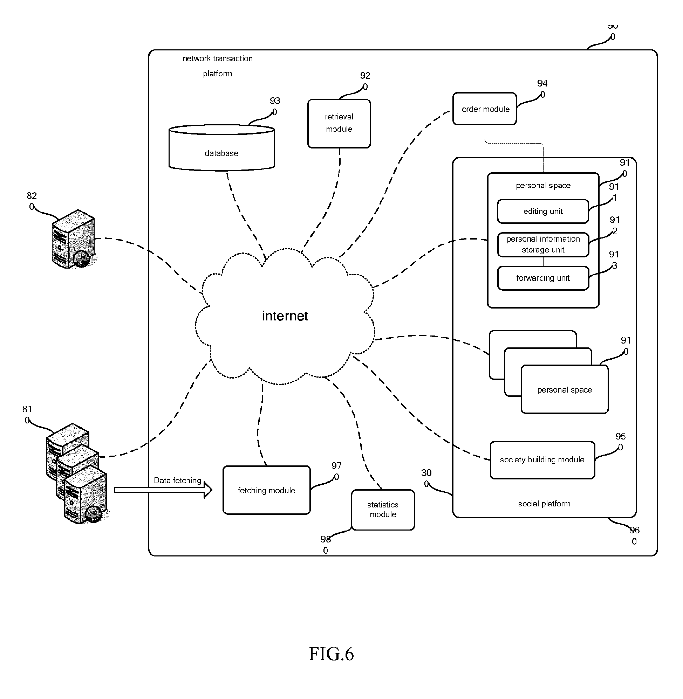

Next with reference to Fig. 6, this figure is a schematic structural view of a network transaction platform according to one preferred embodiment of the present invention, wherein functions of personal space 910, retrieval module 920 and database 930 in network transaction platform 900 have been set forth above and accordingly are not detailed here.

Compared with the specific embodiment shown in Fig. 5, the network transaction platform provided in this specific embodiment preferably further comprises: an order module 940 for generating an order according to the commodity information residing in personal space 910, and handling the order according to the operation of the buyer user corresponding to personal space 910, or forwarding the order to a third-party transaction system for handling, e.g., forwarding the order via the Internet to an order handling server 820 provided by other e-business transaction platform.

Generally network transaction platform 900 has a function of providing a server to a plurality of buyer users, thereby comprising a plurality of personal spaces 910. Optionally, network transaction platform 900 further comprises a society building module 950 for combining a plurality of personal spaces 910 into a social platform, wherein the plurality of personal spaces 910 share stored data between each other. After the plurality of personal spaces 910 are combined into a social platform 960, each of personal spaces 910 not only has the function of presenting the commodity information or the merchant information but also serves a function as a network virtual community. Typically, the personal space comprises a personal information storage unit 912 for storing personalized information uploaded by the corresponding buyer user. The personalized information comprises one or more of text, pictures, video, audio, links or other multimedia electronic data for implementing a network social function, so as to satisfy the buyer user's demand for personalized arrangement in personal space 910 for network social contact. The concrete design method may refer to solutions for social network service in the prior art, e.g., providing social circles, interest groups, etc. As the plurality of personal spaces 910 in social platform 960 share stored data between each other, for purposes of editing and information confidentiality of personal space 910, preferably personal space 910 comprises an editing unit 911 for editing or deleting the personalized information and/or the merchant information, the commodity information and the user tag residing in personal space 910, and modifying view permissions of the personalized information and/or the merchant information, the commodity information and the user tag residing in personal space 910. In addition, personal space 910 further comprises a forwarding unit 913 for forwarding the commodity information/the merchant information residing in personal space 910 to other personal space 910 or public page. With reference to a share function in existing social networks, the design makes it convenient to exchange information between a plurality of personal spaces 910. A typical application scenario is as below: after buyer user A in personal space A publishes a group of user tags, friend buyer user B in the same social circle views this group of user tags and sends appropriate commodity information or merchant information to personal space A or a public information publishing page of the social circle by a forward function of personal space B, so that buyer user A can choose helpful information. Generally speaking, the establishment of social platform 960 helps personal spaces 910 within social platform 960 to obtain useful commodity information or merchant information more accurately and efficiently, thereby reducing the average time spent in information search.

Optionally, network transaction platform 900 further comprises a fetching module for fetching data from the Internet and generating the commodity information and/or the merchant information according to the data. Typically, fetching module 970 is implemented as a server running a crawl program, which accesses via the Internet a plurality of data servers 810 of other e-transaction platforms so as to obtain a series of commodity/merchant-related data that is open to visitors for generating the commodity information/the merchant information. An advantage of designing fetching module 970 is to expand data sources of the commodity information and/or the merchant information and also make it convenient for network transaction platform 900 to share and interface data with other e-business transaction systems.

Optionally, network transaction platform 900 further comprises a statistics module 980 for collecting the user tag, the commodity tag and the merchant tag, and making statistics of hot user tags, hot commodity tags and hot merchant tags, e.g., filtering according to some concern extent of the user tags, the commodity tags and the merchant tags, wherein the concern extent is, for example, the amounts of clicks, the amounts of cross-sell commodities/merchants, or close rate or release frequency of the user tags, the commodity tags and the merchant tags. The statistics of such "hot tags" helps to regulate concrete content of the user tag, the commodity tag and the merchant tag, so as to increase the search success rate of the commodity information or the merchant information. Based on this premise, while defining the user tag the buyer user can directly choose qualified parts from hot user tags, hot commodity tags and hot merchant tags as the user tag.

In a preferred embodiment, various portions of network transaction platform 900 are implemented as a computer program product, embodiments of the computer program product may be implemented using any recording media for computer readable information, and the recording media include magnetic media, optical media or other appropriate media. The embodiments of the computer program product can run not only on an independent physical device but also on a plurality of physical devices that work in collaboration so as to implement functions of and logical relationships between various portions in network transaction platform 900.

The network transaction platform and its processing method provided by the present invention describe consumer demands and specific commodities of buyer users by means of "tagging" techniques and index and retrieve specific commodities by "tagging" technical means, thereby giving optimal result feedback according to a vague consumer demand put forward by a buyer user and providing a more rapid and accurate match result for scattered personal searches.

The information processing method for a network transaction platform as provided by the present invention may be implemented using programmable logic devices or implemented as computer program software. For example, the embodiments according to the present invention may be a computer program product, which is run to cause the computer to execute the method disclosed herein. The computer program product comprises a computer readable storage medium that contains computer program logic or code portion for implementing various steps of the information processing method for a network transaction platform. The computer readable storage medium may be a built-in medium installed within the computer or a removable medium (e.g., a hot plug technique storage device) detachable from the computer body. The built-in medium includes, without limitation, a rewritable non-volatile memory, e.g., RAM, ROM, a flash memory and a hard disk. The removable medium includes, without limitation, optical storage media (e.g., CD-ROM and DVD), magneto-optical storage media (e.g., MO), magnetic storage media (e.g., tapes or removable hard disks), media with a built-in rewritable non-volatile memory (e.g., storage cards), and media with built-in ROM (e.g., ROM boxes).

Those skilled in the art may appreciate that any computer system with appropriate programming means can execute various steps of the method of the present invention which is embodied in a program product. Although most embodiments described in this specification focus on software programs, substitute embodiments that implement the method provided by the present invention as firmware and hardware also fall within the protection scope of the present invention.

It is apparent to those skilled in the art that the present invention is not limited to details of the above illustrative embodiments, and they may implement the present invention in other forms without departing from the spirit or basic features of the present invention. Therefore, nevertheless, the embodiments should be regarded as illustrative rather than limiting. The scope of the present invention is not defined by the above illustration but by the appended claims. Therefore, it is intended to embrace in the present invention all alterations that fall within the meaning and scope of equivalent elements of the claims. Any reference numeral in the claims should not be construed as limiting a claim involved. In addition, the word "comprise/comprising" does not exclude other components, unit or steps, and the singular does not exclude the plural. A plurality of components, units or means as recited in claims may also be implemented as one component, unit or means by software or hardware.

What has been disclosed above is merely some better embodiments of the present invention. The claim scope of the present invention should not be defined hereby. Equivalent changes made according to the claims of the present invention still belong to the scope of the present invention.

## Claims

1. A network transaction platform, comprising:
a personal space for publishing and residing at least one user tag defined by a buyer user,
wherein information contained in each of the user tags is for describing a consumer demand of the buyer user;
a database for storing commodity information and at least one commodity tag corresponding to the commodity information, wherein information contained in the commodity tag is for describing a consumer demand to which the commodity information is directed; and
a retrieval module for retrieving from the database a commodity tag matching the user tag stored in the personal space and corresponding commodity information, and pushing and residing the commodity information in the personal space.

2. The network transaction platform according to Claim 1, wherein
the database is further for storing merchant information and at least one merchant tag corresponding to the merchant information, wherein information contained in the merchant tag is for describing a consumer demand to which the merchant information is directed;
the retrieval module is further for retrieving from the database a merchant tag matching the user tag stored in the personal space and corresponding merchant information, and pushing and residing the merchant information in the personal space.

3. The network transaction platform according to Claim 2, wherein
the commodity information or the merchant information is generated according to data uploaded by a seller user; and
one or more user tags are mapped to one or more commodity tags or merchant tags, or the commodity tag or the merchant tag is generated as defined by the seller user.

4. The network transaction platform according to Claim 1, further comprising:
an order module for generating an order according to the commodity information residing in the personal space, and handling the order according to operation of a buyer user corresponding to the personal space or forwarding the order to a third-party transaction system for handling.

5. The network transaction platform according to any one of Claims 1-3, further comprising:
a society building module for combining a plurality of personal spaces into a social platform, wherein the plurality of personal spaces share stored data between each other.

6. The network transaction platform according to Claim 5, wherein the personal space comprises:
a personal information storage unit for storing personalized information uploaded by the buyer user.

7. The network transaction platform according to Claim 6, wherein the personalized information comprises:
one or more of text, pictures, video, audio, links, or other multimedia electronic data for performing a network social function.

8. The network transaction platform according to Claim 6, wherein the personal space further comprises:
an editing unit for editing or deleting the personalized information and/or the merchant information, the commodity information and the user tag residing in the personal space, and
modifying view permissions of the personalized information and/or the merchant information,
the commodity information and the user tag residing in the personal space.

9. The network transaction platform according to Claim 5, wherein the personal space further comprises:
a forwarding unit for forwarding the commodity information/the merchant information residing in the personal space to other personal space or public page.

10. The network transaction platform according to Claim 3, further comprising:
a fetching module for fetching data from the Internet and generating the commodity information and/or the merchant information according to the data.

11. The network transaction platform according to any one of Claims 1, 3, 4 and 8-10, wherein the commodity information comprises:
the commodity's category, name, feature, brand, price, inventory, promotional information, supplier, picture, video, relevant web page link, and historical transaction records, customer reviews, other data for presenting the commodity's transaction attributes, or combinations thereof.

12. The network transaction platform according to any one of Claims 2, 4 and 8-10, wherein the merchant information comprises:
the merchant's address, contact information, character introduction, picture, video, relevant web page link, customer reviews, other data for presenting the merchant's transaction attributes, or
combinations thereof.

13. The network transaction platform according to Claim 2 or 3, further comprising:
a statistics module for collecting the user tag, the commodity tag and the merchant tag, and making statistics of hot user tags, hot commodity tags and hot merchant tags.

14. A processing method for a network transaction platform, the method comprising:
building a database, a retrieval module and a personal space, respectively;
publishing and residing in the personal space at least one user tag defined by a buyer user, wherein information contained in each of the user tags is for describing a consumer demand of the buyer user;
storing in the database commodity information and at least one commodity tag corresponding to the commodity information, wherein information contained in the commodity tag is for describing a consumer demand to which the commodity information is directed; and
the retrieval module retrieving from the database a commodity tag matching the user tag stored in the personal space and corresponding commodity information, and pushing and residing the commodity information in the personal space.

15. The method according to Claim 14, wherein
the database further stores merchant information and at least one merchant tag corresponding to the merchant information, wherein information contained in the merchant tag is for describing a consumer demand to which the merchant information is directed;
the retrieval module further retrieves from the database a merchant tag matching the user tag stored in the personal space and corresponding merchant information, and pushes and resides the merchant information in the personal space.

16. The method according to Claim 15, wherein
the commodity information or the merchant information is generated according to data uploaded by a seller user; and
one or more user tags are mapped to one or more commodity tags or merchant tags, or the commodity tag or the merchant tag is generated as defined by the seller user.

17. The method according to Claim 14, further comprising:
generating an order according to the commodity information residing in the personal space, and handling the order according to operation of a buyer user corresponding to the personal space or forwarding the order to a third-party transaction system for handling.

18. The method according to any one of Claims 14-16, further comprising:
combining a plurality of personal spaces into a social platform, wherein the plurality of personal spaces share stored data between each other.

19. The method according to Claim 18, further comprising:
the personal space storing personalized information uploaded by the buyer user.

20. The method according to Claim 19, wherein the personalized information comprises:
one or more of text, pictures, video, audio, links, or other multimedia electronic data for performing a network social function.

21. The method according to Claim 20, further comprising:
editing or deleting the personalized information and/or the merchant information, the commodity information and the user tag residing in the personal space; and
modifying view permissions of the personalized information and/or the merchant information, the commodity information and the user tag residing in the personal space.

22. The method according to Claim 17, further comprising:
forwarding the commodity information/the merchant information residing in the personal space to other personal space or public page.

23. The method according to Claim 16, wherein:
the commodity information and/or the merchant information is generated according to data fetched from the Internet.

24. The method according to any one of Claims 14, 16, 17 and 20-23, wherein the commodity information comprises:
the commodity's category, name, feature, brand, price, inventory, promotional information, supplier, picture, video, relevant web page link, and historical transaction records, customer reviews, other data for presenting the commodity's transaction attributes, or combinations thereof.

25. The method according to any one of Claims 15-17 and 21-23, wherein the merchant information comprises:
the merchant's address, contact information, character introduction, picture, video, relevant web page link, customer reviews, other data for presenting the merchant's transaction attributes, or combinations thereof.

26. The method according to Claim 15, further comprising:
collecting the user tag, the commodity tag and the merchant tag, and making statistics of hot user tags, hot commodity tags and hot merchant tags.
